# EUROPÄISCHE PATENTSCHRIFT

(11) **EP 3 292 353 B1**
(45) Veröffentlichungstag und Bekanntmachung des Hinweises auf die Patenterteilung: **28.07.2021**
(21) Anmeldenummer: 16733326.9
(22) Anmeldetag: 15.06.2016
(51) Int. Cl.: F24F 3/14, F24F 5/00, B60H 1/00

(54) **PELTIERLUFTENTFEUCHTER FÜR DEN EINBAU IN EINEN BEHÄLTER**
PELTIER AIR DEHUMIDIFER FOR INSTALLATION IN A CONTAINER
DESHUMIDIFICATEUR A EFFET PELTIER A INSTALLER DANS UN RECIPIENT

(30) Priorität: 28.07.2015 EP 15178670
(43) Veröffentlichungstag der Anmeldung: 14.03.2018
(73) Patentinhaber: Siemens Mobility GmbH, 81739 München (DE)
(72) Erfinder: HENKEL, Thomas, 91341 Röttenbach (DE)
(86) Internationale Anmeldenummer: PCT/EP2016/063739
(87) Internationale Veröffentlichungsnummer: WO 2017/016742

(56) Entgegenhaltungen:
- EP-A1- 2 327 944
- GB-A- 900 043
- US-A- 3 445 039
- US-A- 3 934 758
- US-A- 4 279 292

## Beschreibung

Die Erfindung betrifft ein Entfeuchtungsgerät zum Entfeuchten von Luft in einem Behälter mit mindestens einem Peltierelement. Die Erfindung betrifft weiter einen Behälter, insbesondere einen Stromrichtercontainer, mit einem solchen Entfeuchtungsgerät sowie ein Fahrzeug, insbesondere ein Schienenfahrzeug, mit einem solchen Entfeuchtungsgerät. Weiter betrifft die Erfindung ein Verfahren zum Entfeuchten von Luft im Innenraum eines Behälters.

Die Entfeuchtung dient dem Schutz von elektronischen oder leistungselektronischen Bauteilen und Baugruppen. Diese sind zumeist in Behältern, auch als Container bezeichnet, angeordnet. In Fahrzeugen wie beispielsweise Schienenfahrzeugen sind diese Behälter oftmals als Unterflur-, Dachcontainer, Lok-Stromrichterschränke in der Schutzart IP54 ausgeführt, um für die Funktion der umschlossenen technischen Komponenten und des Gesamtsystems einen definierten Mindestschutz vor Umgebungseinflüssen zu bieten. Das Eindringen von Luftfeuchtigkeit in den Behälter wird dadurch jedoch nicht oder nur unzureichend verhindert.

Mögliche Auswirkungen von Feuchtigkeit sind Korrosions- und Migrationserscheinungen an Halbleiterstrukturen und Lot, insbesondere von nicht gekapselten Leistungshalbleitern, mit erheblichem Schadenspotenzial und die Lebensdauer vermindernder Wirkung auch deutlich unterhalb der in den Datenblättern genannten zulässigen Werte für die relative Luftfeuchtigkeit.

Eine zum Schutz der elektronischen Baukomponenten vor Umwelteinflüssen komplett luftdichte Ausführung von Behältern ist teuer und mit hohem Gewicht des entsprechenden Behälters verbunden. Gerade jedoch für Fahrzeuge verlangt der Markt kostengünstige und leichte Lösungen.

Eine weitere Möglichkeit zur Reduzierung der Luftfeuchtigkeit im Innern von Behältern besteht darin, in diese Behälter Trockenmittel, wie beispielsweise Gel-Trockenmittel, einzubringen, welche der Luft Feuchtigkeit entziehen. Es besteht jedoch der Nachteil, dass bei Sättigung des Gels diese Trocknungsmittel regelmäßig getauscht werden müssen. Gerade in Regionen mit hoher oder stark schwankender Luftfeuchtigkeit ergeben sich daraus kurze Wartungsintervalle. Diese Wartungsarbeit begrenzt die Verfügbarkeit des entsprechenden Gerätes oder Fahrzeugs und erhöht darüber hinaus die Kosten für den Betrieb. Die externe Regeneration des Trockenmittels bzw. Einsatz von neuem Trockenmittel erhöht weiter die Kosten beim Einsatz dieser Trocknungsmittel.

Handelsübliche Schaltschrankkühlgeräte mit einem Kältemittelkreislauf, welche teilweise durch Erweiterung mittels Zubehörteilen zum Entfeuchten von Luft geeignet sind, werden in der Regel mit einem Wechselstrommotor betrieben. Diese haben dann den Nachteil einer relativ aufwändigen Konstruktion mit vergleichsweise großem Raumbedarf.

Des Weiteren sind am Markt Peltierentfeuchtungsgeräte für Anwendungen in Schaltschränken u.a. mit Wandeinbau für Umgebungstemperatur bis ca. 30°C verfügbar. Dabei ist die Warmseite des Entfeuchtungsgerätes derart in der Wand angebracht, dass die Warmseite durch die Luft außerhalb des Schaltschrankes gekühlt wird und an der Kaltseite, beispielsweise als Kondensationsplatte ausgeführt, im Innenraum des Schaltschrankes Feuchtigkeit kondensiert. Auch stationären Anlagen und Installationen im Außenbereich, z.B. für Telekommunikationstechnik, werden mit diesem geplanten und vorbereiteten Wandeinbau ausgestattet, um das niedrigere Außentemperaturpotenzial zu nutzen, was für die Funktion des Gerätes und einen geringen Energieeinsatz von Vorteil ist.

Je stärker die Unterkühlung der Kaltseite (zwischen ungefähr 0°C und Taupunkttemperatur > 0°C) desto größer ist die Kondensationsleistung und auch die minimal erreichbare relative Luftfeuchtigkeit bei einer bestimmten Lufttemperatur. Unter Kondensationsleistung wird die Menge kondensierter Feuchtigkeit pro Zeit bezeichnet.

Für eine Erhöhung der Kühlleistung werden üblicherweise mehrere Peltierelement parallel angeordnet.

Es hat sich in einigen Anwendungsfällen, wie beispielsweise bei Einsatz auf Fahrzeugen, als nachteilig herausgestellt, in die Außenwände von Schaltschränken oder anderen Behältern eine Aussparung vorzusehen, in die ein Entfeuchtungsgerät eingeführt werden kann, um dessen Warmseite mit der Umgebungsluft zu kühlen. Diese Behälter verfügen dann im Vergleich zu solchen mit einer geschlossenen Oberfläche über eine deutlich verminderte Stabilität. Um eine gewünschte oder geforderte mechanische Stabilität zu erreichen muss der Behälter beispielsweise durch das Einbringen weiterer Streben verstärkt werden. Dies wiederum geht zu Lasten des Gewichtes des Behälters und damit eines damit ausgestatteten Fahrzeugs.

Aus dem Dokument GB 900 043 A ist ein Entfeuchtungsgerät zum Entfeuchten von Luft oder anderen Gasen mittels eines thermoelektrischen Geräts unter Nutzung des Peltier-Effekts bekannt.

Der Erfindung liegt die Aufgabe zugrunde, eine Lösung zur Entfeuchtung von Luft im Innern eines Behälters anzugeben.

Die Aufgabe wird durch Entfeuchtungsgerät zum Entfeuchten von Luft in einem Behälter mit mindestens einem Peltierelement gelöst, wobei das Peltierelement als einstufiges Peltierelement ausgebildet ist, wobei das Peltierelement mit einer Kaltseite und mit einer Warmseite thermisch verbunden ist, wobei die Kaltseite derart ausgestaltet ist, dass beim Betrieb des Entfeuchtungsgerätes an der Kaltseite Feuchtigkeit der Luft kondensiert, wobei das Peltierelement zwischen Warmseite und Kaltseite mittels einer Schraubenfeder und eines Spannstifts eingespannt ist. Kennzeichnend weist die Warmseite auf der dem Peltierelement zugewandten Seite eine stopfbuchsenartige Abdichtung auf, wobei die stopfbuchsenartige Abdichtung durch eine Senkung auf der Warmseite mit einer darin eingebrachten Gummibuchse ausgestaltet ist und wobei die Gummibuchse am Innendurchmesser den Spannstift umschließt

Die Aufgabe wird weiter durch einen Behälter mit einem solchen Entfeuchtungsgerät gelöst, wobei das Entfeuchtungsgerät vollständig im Innern des Behälters angeordnet ist und wobei das Entfeuchtungsgerät derart im Behälter angeordnet, dass ein durch den Lüfter erzeugbarer Luftstrom sich zumindest abschnittsweise entlang einer Außenwand des Behälters ausbildet.

Weiter wird die Aufgabe durch ein Fahrzeug, insbesondere ein Schienenfahrzeug, mit einem derartigen Behälter gelöst.

Ferner wird die Aufgabe durch ein Verfahren zum Entfeuchten von Luft im Innenraum eines Behälters mittels eines solchen Entfeuchtungsgerätes gelöst, wobei eine Kondensationsleistung des Entfeuchtungsgerätes in Abhängigkeit von der Temperatur der Kaltseite gesteuert oder geregelt wird. Kennzeichnend wird die Kondensationsleistung des Entfeuchtungsgerätes derart gesteuert oder geregelt, dass die Temperatur der Kaltseite einen Wert im Bereich zwischen -5°C und 10°C annimmt, wobei die Kondensationsleistung des Entfeuchtungsgerätes derart gesteuert oder geregelt wird, dass die Temperatur der Kaltseite einen Wert von mindestens 40 K unterhalb der Temperatur der Warmseite annimmt.

Vorteilhafte Ausgestaltungen der Erfindung sind in den abhängigen Ansprüchen angegeben.

Der Erfindung liegt die Erkenntnis zugrunde, dass sich das Entfeuchtungsgerät komplett im Innern eines Behälters anordnen lässt, wenn die zwischen Warmseite und Kaltseite erzielbare Temperaturdifferenz entsprechend groß ist. Dies ist insbesondere dann von großer Bedeutung, wenn sich der Innenraum des Behälters im Betrieb erwärmt. Damit die Temperaturdifferenz zwischen Warmseite und Kaltseite entsprechend große Werte annehmen kann, müssen Warmseite und Kaltseite thermisch gut voneinander isoliert werden. Dazu wird Peltierelement zwischen Warmseite und Kaltseite mittels Schraubenfeder und Spannstift eingespannt. Dieser Spannstift bildet einen hohen thermischen Übergangswiderstand, so dass die Warmseite und die Kaltseite thermisch gut voneinander isoliert sind.

Diese Anordnung im Innern des Behälters erfordert dann einen Kondensationsbetrieb auch bei Temperaturen, die oberhalb der Umgebungstemperatur liegen, da die Warmseite des Entfeuchtungsgerätes durch den Behälter, genauer durch die Behälterwand, von der Umgebungsluft getrennt ist und daher nicht mit der Umgebungsluft in Kontakt steht. Es ist davon auszugehen, dass sich das Innere des Behälters durch die darin befindlichen Geräte und Komponenten erwärmt. Somit ist ein effizienter Kondensationsbetrieb im Temperaturbereich zwischen ca. 8°C und ca. 50°C erforderlich. Die Temperaturgrenzen stellen dabei keine scharfen, durch technische Bedingungen erzwungenen Randbedingungen dar, sondern es hat sich gezeigt, dass vielmehr außerhalb der Temperaturgrenzen die erreichbare Kondensationsleistung nur noch marginal und somit wirtschaftlich fraglich ist. Die obere Temperaturgrenze bei 50°C muss deswegen mit brauchbarer Kondensationsleistung erreicht werden, da typische Innenraumtemperaturen von Behältern mit elektrischen und elektronischen Bauteilen bei etwa 45°C beobachtet wurden. Insbesondere in einem Stromrichtercontainer stellt sich dieser Wert aufgrund lastabhängiger Verluste des Stromrichters und der Umgebungstemperatur ein. Es hat sich für den Einsatz im Innern des Behälters als vorteilhaft erwiesen, das Entfeuchtungsgerät durch eine gute thermische Entkopplung von Warmseite und Kaltseite, also durch Vermeidung parasitärer Wärmerückleitung zur Kaltseite, derart leistungsfähig zu gestalten, so dass von der durch den Peltiereffekt generierten Temperaturdifferenz ein möglichst hoher Anteil auf der Kaltseite in Form von Unterkühlung im Verhältnis zur Innentemperatur des Gehäuses effektiv zum Zwecke der Kondensation von Feuchtigkeit zur Verfügung steht.

Stromrichtercontainer sind aufgrund ihrer installierten Komponenten im besonderen Maße abhängig von einer hinreichend entfeuchteten Luft im Innenraum. Darüber hinaus ist die einwandfreie Funktion des Stromrichters für den Antrieb eines damit angetriebenen Fahrzeugs, insbesondere eines Bahnfahrzeugs, zwingend erforderlich. Um die Einsatzfähigkeit des Fahrzeugs sicherzustellen ist ein zuverlässiger Betrieb des Stromrichters notwendig. Darüber hinaus müssen Fahrzeuge, insbesondere Schienenfahrzeuge, oftmals spezielle Anforderungen bezüglich des Brandschutzes erfüllen. Dabei muss ein Durchbrand der Umschließungsflächen eines Behälters gewährleistet sein. Zur Erfüllung dieser Anforderung hat es sich als sinnvoll erwiesen, das Entfeuchtungsgerät im Innern des Behälters anzuordnen und auf eine Kühlung mit Umgebungsluft, die sich außerhalb des Behälters befindet, zu verzichten. Durch die Anordnung im Innern des Behälters ohne Öffnungen in den Außenflächen des Behälters erhöht sich die Stabilität gegen Durchbrand. Dies erleichtert das Zulassungsverfahren im Hinblick auf die Erfüllung brandschutztechnischer Anforderungen. Auf eine kostenträchtige Einzelnachweisführung kann oftmals verzichtet werden.

Der Einsatz des Entfeuchtungsgerätes in einem Fahrzeug hat sich ebenfalls als günstig erwiesen, da aufgrund der Einspannung mittels Spannstiften das Entfeuchtungsgerät nur eine geringe Empfindlichkeit gegenüber Schwingungsbeanspruchung oder Stößen aufweist, die in Fahrzeugen und Schienenfahrzeugen häufig die Komponenten im Innern belasten.

Derzeit am Markt verfügbare Geräte haben in dem genannten Temperaturbereich der Luft bei etwa 40°C bis 50°C nur eine unzureichende Kondensationsleistung oder verlieren das Vermögen zur Kondensation durch Ansteigen der Temperatur auf der Kaltseite komplett. Es hat sich gezeigt, dass der Anstieg der Temperatur durch die thermische Isolation zwischen Kaltseite und Warmseite reduziert werden kann. Damit wird weniger elektrische Leistung für den Betrieb des Entfeuchtungsgerätes gebraucht, so dass auch geringere elektrische Verluste entstehen. Durch die geringeren elektrischen Verluste reduziert sich die Erwärmung der Kaltseite weiter und es lassen sich noch höhere Temperaturunterschiede zwischen Warmseite und Kaltseite erreichen.

Die am Markt verfügbaren Geräte sind für einen Nennarbeitspunkt von beispielsweise 30°C Lufttemperatur mit 80% relativer Luftfeuchtigkeit ausgelegt. Es wurde bei derartigen Geräten festgestellt, dass die zur Kondensation auf der Kaltseite erforderliche Taupunkttemperaturunterschreitung bei weiter ansteigender Gehäuse-Innentemperatur nicht mehr erreicht wird. Die wesentliche Begründung hierfür ist eine zu geringe Temperaturdifferenz am Peltierelement selbst.

Die erforderliche Erhöhung der vom Peltierelement erzeugten Temperaturdifferenz kann bei gleicher thermischer Nutzlast, in diesem Falle die abzuführende Kondensationswärme der Luftfeuchtigkeit, nur durch Erhöhung des elektrischen Stroms durch das Peltierelement erzeugt werden. Die damit einhergehende deutliche Steigerung der an die Innenraumluft abzuführenden Wärmeenergie erfolgt nur unzureichend, so dass das gesamte Temperaturniveau der aktiven Bauteile des Peltierentfeuchtungsgerätes ansteigt. Hierin eingeschlossen ist ein Temperaturanstieg auf der Kaltseite des Peltierentfeuchtungsgerätes und somit auch eine Reduzierung der Kondensationsleistung oder sogar der Verlust des Kondensationsvermögens infolge Überschreitung der Taupunkttemperatur.

Der Effekt der Temperaturerhöhung an der Kaltseite wird darüber hinaus durch einen Temperaturanstieg im Innenraum des Behälters noch verstärkt. Zufriedenstellende Kondensationsleistungen sind bei bisherigen Geräten kaum noch erfüllbar bzw. unerfüllbar, da dazu die Temperatur der Kondensationsplatte (Kaltseite) deutlich unter der Taupunkttemperatur liegen muss.

Durch mehrere Maßnahmen beispielsweise zur Verbesserung der Wärmeabfuhr auf der Warmseite und zur Vermeidung parasitärer Wärmerückleitung von der Warmseite zur Kaltseite am Entfeuchtungsgerät ergibt sich der Vorteil, dass das Entfeuchtungsgerät zum Entfeuchten von Luft mit einer Temperatur im Bereich bis zu 50°C ausgelegt ist und bei dieser Temperatur dauerhaft betrieben werden kann. Durch die verbesserte thermische Entkopplung ergibt sich der Vorteil, dass das Entfeuchtungsgerät zum Entfeuchten von Luft mit einer relativen Feuchtigkeit im Bereich von 10% bis 30% und/oder mit einer Temperatur im Bereich von 40°C bis 50°C ausgelegt ist und betrieben werden kann. Dazu wird zwischen Warmseite und Kaltseite eine Temperaturdifferenz von mindestens 40K eingestellt. Durch den Einbau des Entfeuchtungsgerätes in einen Behälter kann die Warmseite des Entfeuchtungsgerätes nicht mit der Umgebungslufttemperatur sondern nur mit der Innenraumtemperatur gekühlt werden. Aufgrund der im Behälter angeordneten elektrischen und/oder elektronischen Geräten und Bauelementen, wie beispielsweise Halbleiterbauelemente, erwärmt sich der Innenraum des Behälters, so dass das Entfeuchtungsgerät bei einer Temperatur von etwa 40°C bis 50°C betrieben wird. Durch die angestiegene Temperatur verringert sich bei gleicher absoluter Feuchtigkeit in der Luft die relative Luftfeuchtigkeit auf Werte von beispielsweise 20% bis 30% relativer Feuchte. Gerade diese Umgebungsbedingungen stellen für das Entfeuchtungsgerät hohe Ansprüche dar. Während am Markt verfügbare Entfeuchter hier keine zufriedenstellende Kondensationsleistungen mehr aufweisen, ist hingegen das vorgeschlagene Entfeuchtungsgerät im besonderen Maße geeignet, auch unter den genannten Bedingungen zufriedenstellende Kondensationsleistungen zu realisieren.

Es hat sich herausgestellt, dass sich die Kondensationsleistung dadurch weiter erhöhen lässt, wenn die Warmseite und die Kaltseite des Entfeuchtungsgerätes thermisch noch besser voneinander getrennt werden, d.h. thermisch voneinander isoliert werden, um parasitär wirkende Wärmerückleitung zur Kaltseite zu vermeiden. Dazu wird das Peltierelement mittels einer oder mehrerer Schraubenfedern und eines oder mehrerer Spannstifte zwischen Warmseite und Kaltseite eingespannt. Auf diesem Wege entstehen lange kraftleitende Pfade der mechanischen Verbindung zwischen der Warmseite und Kaltseite für den konstruktiven Zusammenhalt des Peltierentfeuchtungsgerätes aber mit der Möglichkeit, bei entsprechender Werkstoffauswahl und Querschnittsgestaltung den thermischen Widerstand kraftleitenden Bauteile zu erhöhen. Dadurch wird parasitär wirkende Wärmerückleitung zur Kaltseite minimiert, wodurch die Temperatur an der Kaltseite niedrig bleibt und somit die Kondensationsleistung erhöht wird. Gleichzeitig erlaubt die Reduktion des Wärmeaustausches eine weitere Erhöhung der Temperaturdifferenz durch Erhöhung des Stromes durch das Peltierelement, bei einem gemäßigten Anstieg der elektrischen Verluste. Solange der Effekt der höheren Temperaturdifferenz gegenüber den erhöhten elektrischen Verlusten überwiegt, kann die Kondensationsleistung weiter gesteigert werden. Dies ermöglicht den Betrieb eines Entfeuchtungsgerätes, das im Innern eines Behälters angeordnet ist, auch dann, wenn die Temperatur im Innern des Behälters im Betrieb der Komponenten des Behälters ansteigt.

Durch die Schraubenfeder und den Spannstift wird zudem ein definierter Andruck des Peltierelements zu der Warmseite und der Kaltseite geschaffen. Dadurch ergibt sich eine optimale thermische Kopplung des Peltierelements sowohl an die Warmseite als auch an die Kaltseite des Entfeuchtungsgerätes. Darüber hinaus wird kein oder zumindest nur wenig spaltenfüllendes Wärmeleitmittel benötigt. Dies vereinfacht die Herstellung des Entfeuchtungsgerätes.

Darüber hinaus bietet der Aufbau mittels Einspannung durch Schraubenfeder und Spannstift eine robuste mechanische Befestigung der Kaltseite (Kondensationsplatte) insbesondere in Hinblick auf die zu erwartenden Schwingbeanspruchungen bei der Verwendung in einem Fahrzeug oder Schienenfahrzeug. Darüber hinaus bietet der erfindungsgemäße Aufbau eine thermische Entkopplung der kalten Kondensationsplatte (Kaltseite) von der vergleichsweisen heißen oder zumindest warmen Warmseite über lange Wärmeleitwege. Hier haben sich insbesondere lange Stiftverbindungen als günstig erwiesen.

Ein weiterer Vorteil der erfindungsgemäßen Ausführung besteht in der vereinfachten Montage, ohne die Anforderung nach präziser Einhaltung sehr niedriger Anziehdrehmomente (z.B. 0,5 Nm) verbunden mit großer Unsicherheit in der Reproduktion, wie sie bei einer Verwendung gewöhnlicher Schrauben der Dimension M3 oder M4 erforderlich sind.

Die Einspannung unter Verwendung von Schraubenfedern ist darüber hinaus im Vergleich zu einer Verschraubung von Kalt- und Warmseite mit z.B. Schaftschrauben unempfindlich gegenüber Temperaturschwankungen und somit vorteilhaft. Schraubenfedern benötigen selbst im Vergleich zu oft empfohlenen Tellerfedern wegen der niedrigen Federrate wesentlich größere Federwege von mehreren Millimetern zum Spannkraftaufbau. Das bedeutet, dass die unter großen Temperaturschwankungen stattfindenden Längenänderungen der spannkraftleitenden Bauteile von wenigen 1/10mm im Hinblick auf eine Spannkraftänderung des Systems bedeutungslos bleiben. Durch den Betrieb verschiedener elektrischer Geräte, wie beispielsweise Stromrichter, in dem Behälter treten Temperaturschwankungen in dem Behälter auf. Daraus ergibt sich eine große thermische Beanspruchung der Einspannanordnung. Durch die Schraubenfeder ist die Anpresskraft der Warmseite und der Kaltseite an das Peltierelement nahezu temperaturunabhängig, so dass die Lebensdauer dieser Anordnung deutlich gesteigert werden kann.

Darüber hinaus hat es sich als günstig erwiesen, die Schraubenfeder auf der Warmseite des Entfeuchtungsgerätes anzuordnen. Diese Anordnung der Schraubenfedern auf der Warmseite, insbesondere bei der Verwendung eines Kühlkörpers, bei dem die Schraubenfeder in vorteilhafter Weise zwischen den Kühlrippen angeordnet werden, hat den Vorteil, dass diese eine raumsparende Unterbringung im Vergleich zur Anordnung auf der Seite der Kondensationsplatte darstellt.

Durch das erfindungsgemäße Entfeuchtungsgerät ergibt sich eine in einem ausreichenden Maße vorhandene Kondensation bei 50°C im Einbauraum sowie eine hohe mechanische Schwingfestigkeit und Robustheit. Darüber hinaus ist eine kompakte Bauform für das Entfeuchtungsgerät erzielbar. Ferner ist durch Vermeidung von thermomechanisch verursachter Beanspruchung der Peltier-Elemente eine hohe Zuverlässigkeit des erfindungsgemäßen Entfeuchtungsgerätes sichergestellt.

Erfindungsgemäß weist die Warmseite auf der dem Peltierelement zugewandten Seite eine stopfbuchsenartige Abdichtung auf, wobei die stopfbuchsenartige Abdichtung durch eine Senkung auf der Warmseite mit einer darin eingebrachten Gummibuchse ausgestaltet ist, wobei die Gummibuchse am Innendurchmesser den Spannstift umschließt. Es hat sich als vorteilhaft erwiesen, den Raum zwischen Kaltseite (Kondensationsplatte) und Warmseite gegen den Zutritt von wasserdampfhaltiger Luft zu schützen. Dazu wird eine Gummibuchse verwendet, die in einer Senkung auf der Warmseite untergebracht ist. Sie umschließt am Innendurchmesser den Spannstift. Die Senkung auf der Warmseite, insbesondere auf einem dort in vorteilhafter Weise angebrachten Kühlkörper, ist in ihrer Tiefe und Form so dimensioniert, dass die Kraft der Schraubenfeder die Gummibuchse geringfügig zusammenpresst und auf diesem Wege die Abdichtung am Umfang des Spannstiftes und am Bohrungsumfang in der Warmseite zustande kommt. Darüber hinaus wird durch die Gummibuchse eine weitere thermische Entkopplung zwischen Warmseite und Kaltseite erreicht. Durch die Abdichtung gegenüber wasserdampfhaltiger Luft werden destruktiv wirkende Korrosionserscheinungen an den Peltierelementen, die zu einer deutlichen Lebensdauerverkürzung führen, zuverlässig vermieden.

Bei einer weiteren vorteilhaften Ausgestaltung der Erfindung weist der Spannstift eine Querschnittsverjüngung auf. Die Spannstifte bilden wegen des erwünschten und erforderlichen Kraftschlusses zwangsläufig einen Wärmeleitpfad zwischen der kalten Kondensationsplatte (Kaltseite) und der vergleichsweise warmen Warmseite. Der hierdurch entstehende Wärmestrom soll möglichst gering bleiben, da es sich um parasitäre Verluste handelt. Die Querschnittsverjüngung trägt dazu bei, den thermischen Widerstand im Wärmeleitpfad zu erhöhen. Dies ermöglicht eine hohe Kondensationsleistung.

Bei einer weiteren vorteilhaften Ausgestaltung der Erfindung umfasst die Warmseite einen Wärmetauscher, insbesondere einen Kühlkörper, wobei zwischen dem Wärmetauscher und dem Peltierelement ein Wärme-Spreiz-Bauteil angeordnet ist. Durch den Wärmetauscher wird der thermische Widerstand zwischen der Warmseite und der Ambient-Temperatur (Temperatur der Innenraumluft des Behälters) reduziert. Für die Minimierung des thermischen Widerstandes hat es sich als besonders günstig erwiesen, durch die Verwendung eines Wärme-Spreiz-Bauteil die durch die angestrebten kompakten Abmessungen nur begrenzt zur Verfügung stehende Wärmetauscherfläche des Wärmetauschers bzw. Kühlkörpers möglichst effektiv zu nutzen. Das Wärme-Spreiz-Bauteil ermöglicht eine Verteilung der Wärme der Warmseite gleichmäßig und großflächig auf den Wärmetauscher. Damit kann, insbesondere auch bei geringer Differenz zwischen Ambient-Temperatur und Kühlkörpertemperatur, die Wärme zuverlässig an die Umgebung abgeführt werden, so dass eine Kondensation auch bei hohen Temperaturen, wie sie beispielsweise im Innern eines Behälters auftreten können, erfolgen kann. Darüber hinaus kann auf die Verwendung von Wärmeleitmittel vollständig verzichtet werden, da das Wärme-Spreiz-Bauteil bereits eine optimale thermische Anbindung an die mit ihm in Kontakt stehenden Oberflächen sicherstellt.

Bei einer weiteren vorteilhaften Ausgestaltung der Erfindung weist das Entfeuchtungsgerät mindestens einen Lüfter und ein Mittel zur Luftführung auf, wobei der Lüfter und das Mittel zur Luftführung derart angeordnet ist, einen Luftstrom zu erzeugen, wobei sich der Luftstrom über Kaltseite und Warmseite des Entfeuchtungsgerätes erstreckt. Dabei hat es sich als vorteilhaft erwiesen, nur einen Teil der Luft, die über die Warmseite geführt wird zuvor auch über die Kaltseite zu führen. Ein weiterer Teil der Luft wird nur über die Warmseite geführt. Dazu werden an dem Entfeuchtungsgerät entsprechende Mittel zur Luftführung wie beispielsweise Luftleitbleche angeordnet. Zur Abfuhr der eingespeisten elektrischen Antriebsenergie zuzüglich der bei der Wasserdampfkondensation entstehenden Wärmemenge auf einem angestrebt möglichst niedrigem Temperaturniveau der Warmseite ist der Lüfter vorgesehen. Durch diesen Lüfter, der einen Kühlluftstrom über die Warmseite erzeugt, wird ein niedriger thermischer Widerstand zwischen der Warmseite und Ambient (Innenraumluft des Behälters) erzielt. Dieser ist zur Herstellung einer hohen Temperaturdifferenz zwischen Warmseite und Kaltseite besonders günstig. Die Wärmeabfuhr unter diesen Bedingungen - hohe Ambient-Temperatur mit entsprechend reduzierter Luftdichte - bei gleichzeitiger Anforderung nach reduzierter Übertemperatur am Wärmetauscher (Kühlkörper) kann auf einfache Weise durch eine Steigerung des Luftstromes erreicht werden. Die Übertemperatur ist erforderlich, damit der Wärmetauscher Energie in Form von Wärme abgeben kann. Es hat sich darüber hinaus als günstig erwiesen, den Luftstrom derart zu führen, dass die Luft vor dem Vorbeiführen an der Warmseite an der Kaltseite entlanggeführt wird. Somit bewirkt ein Lüfter sowohl eine Luftbewegung an der Kaltseite wie auch an der Warmseite. Damit kann auf den Einsatz eines weiteren Lüfters verzichtet werden. Es kann so eine ausreichende Zufuhr von wasserdampfhaltiger Innenraumluft an der Kondensationsplatte sichergestellt werden. Durch den Luftstrom, der sich über die Kaltseite und die Warmseite erstreckt, wird nur ein Lüfter benötigt, der die Luft bewegt. Auf separate Lüfter jeweils für Kaltseite und Warmseite kann verzichtet werden. Somit ergibt sich eine Kosteneinsparung und eine Steigerung der Zuverlässigkeit durch Wegfall eines Lüfters. Es kann durch Verwendung nur eines Lüfters sowohl die Frischluftversorgung der Kondensationsplatte (Kaltseite) wie auch die Kühlung der Warmseite zuverlässig sichergestellt werden.

Bei einer weiteren vorteilhaften Ausgestaltung der Erfindung weist der Lüfter eine axiale Ausblasrichtung auf, wobei die axiale Ausblasrichtung senkrecht zu einer Oberfläche der Kaltseite angeordnet ist. Axiales Ausblasen ermöglicht die Reduzierung der effektiv wirkenden Bauhöhe des Gerätes, da erforderliche Luftquerschnitte zum Zweck der definierten Luftabströmung nicht berücksichtigt werden müssen. Diese haben hohe Relevanz für die erreichbare und technisch erforderliche Kühlwirkung des Entfeuchtungsgerätes. Axiales Ausblasen ermöglicht es ferner, einen Luftkanal an der Ausblasöffnung ins Behälterinnere zeigend zu montieren, so dass durch baulich vorhandene räumliche Beengtheit eintretende Strömungskurzschlüsse zwischen Frischluft (zu entfeuchtende Luft) und Abluft (entfeuchtete Luft) relativ einfach eliminiert werden können.

Bei einer weiteren vorteilhaften Ausgestaltung der Erfindung umfasst das Entfeuchtungsgerät eine Regelvorrichtung, die derart ausgelegt ist, einen Strom durch das Peltierelement mittels Pulsweitenmodulation (PWM) zu regeln. Um Eisbildung bei niedrigen Temperaturen zu vermeiden, hat es sich als vorteilhaft erwiesen, die Temperatur der Kaltseite und damit der elektrische Strom durch das Peltierelement geregelt werden. Gegenüber einem Zweipunktregler, ggf. mit einer Hysteresefunktion ausgestattet, besteht bei der Pulsweitenmodulation der Vorteil darin, dass die Temperaturschwankungen auf der Kaltseite reduziert werden. Häufige Thermozyklen, hervorgerufen durch den hohen elektrischen Strom durch das Peltierelement, mit entsprechender Ermüdungsbeanspruchung der Peltierelemente, wie sie beispielsweise bei einer oben genannten Zweipunktregelung entstehen, machen einen frühzeitigen Ausfall des Entfeuchtungsgerätes wahrscheinlich. Durch die Pulsweitemodulation hingegen kann der Strom durch das Peltierelement derart genau geregelt werden, dass keine oder nur geringe Temperaturschwankungen an der Kaltseite entstehen. Diese führen aufgrund einer geringeren thermischen Beanspruchung der Bauteile zu einer deutlich verlängerten Lebensdauer des Entfeuchtungsgerätes.

Bei einer weiteren vorteilhaften Ausgestaltung der Erfindung ist eine Abdichtung zwischen der Kaltseite und einem Abdichtrahmen mittels einer Dichtfuge aus elastischem oder plastischem Werkstoff ausgeführt. Es muss verhindert werden, dass kondensierte Feuchtigkeit in das Innere des Entfeuchtungsgerätes eindringt. Mangelhafte Abdichtung der Peltierelemente gegenüber der Umgebung führt an den Elementen zu Korrosion an der Kaltseite (innenliegend an den aktiven Peltierkristallen) und infolge dessen zum Ausfall. Die während des Fertigungsprozesses gut zugängliche Fuge bietet durch Lage und einfache Geometrie eine gute Voraussetzung zur Herstellung einer hochqualitativen Abdichtung. Die Abdichtung erfolgt mit einer Dichtfuge aus elastischem oder plastischem Werkstoff. Diese hat im Vergleich zu einem O-Ring den Vorteil, dass zur Abdichtung keine Anpresskraft erforderlich ist, welche das Dichtbauteil presst. Es hat sich als günstig erwiesen, die Dichtfuge zur Realisierung einer niedrigen Wärmeleitfähigkeit mit einem geringen Wärmeleitquerschnitt auszuführen.

Bei einer weiteren vorteilhaften Ausgestaltung der Erfindung ist dabei der Abdichtrahmen aus einem duroplastischen Werkstoff ausgeführt. Es hat sich als günstig erwiesen, einen Werkstoff zu verwenden, der eine geringe Wärmeleitfähigkeit, eine geringe Wasserdampfpermeabilität und einen vergleichsweise hohen E-Modul aufweist.

Bei einer weiteren vorteilhaften Ausgestaltung der Erfindung ist dabei auf zumindest Teilen des Abdichtrahmens eine Wasserdampfsperre mit wärmeisolierender Eigenschaft angeordnet. Bei hohen Werten von relativer Luftfeuchtigkeit entsteht an Bauteilen oder Bauteilabschnitten mit Temperaturen in der Nähe bzw. unter dem Taupunkt Kondensat. Das Kondensat entsteht an diesen Bauteilen unerwünscht, da eine gezielte Kondensatableitung an diesen Stellen konstruktiv nicht vorgesehen ist. Das Kondensat tropft unkontrolliert ab, was grundsätzlich unerwünscht ist. Aus diesem Grunde muss der Zutritt von wasserdampfhaltiger Luft zu den Oberflächen dieser Bauteile unterbunden werden.

Bei einer weiteren vorteilhaften Ausgestaltung der Erfindung weist das Entfeuchtungsgerät einen oben bereits beschriebenen Lüfter auf, wobei das Entfeuchtungsgerät derart im Behälter angeordnet ist, dass ein durch den Lüfter erzeugbarer Luftstrom sich zumindest abschnittsweise entlang einer Außenwand des Behälters ausbildet. Es hat sich als besonders vorteilhaft erwiesen, das Entfeuchtungsgerät in der Nähe der Behälteraußenwand anzuordnen. Dies ist insbesondere dann vorteilhaft, wenn es sich bei dem Behälter um einen Unterflur- oder Dachcontainer handelt und die Wandtemperatur unterhalb der Innenraumtemperatur liegt. Die angesaugte Luft hat dann eine vergleichsweise niedrigere Temperatur, was günstigere Arbeitsbedingungen für den Entfeuchter darstellt. Es kann höhere Kondensationsleistung und somit Entfeuchtungswirkung erwartet werden. Besonders von Vorteil ist es darüber hinaus, wenn das Ausblasen des Lüfters in axialer Richtung zum Behälterinneren hin gerichtet ist und das Ansaugen in entgegengesetzter Richtung von der Behälteraußenwand erfolgt.

Bei einer weiteren vorteilhaften Ausgestaltung der Erfindung ist der Behälter zur Aufnahme von elektrischen und/oder elektronischen Bauteilen ausgestaltet. Elektrische und elektronische Bauteile, sowie auch teilweise mechanische Bauteile, unterliegen bei hoher Luftfeuchtigkeit durch damit einhergehender Kondensation einer Korrosion. Diese kann zu Fehlverhalten oder Ausfall der entsprechenden Komponenten führen. Darüber hinaus reduziert dies die Lebensdauer dieser Komponenten teilweise deutlich.

Bei einer weiteren vorteilhaften Ausgestaltung der Erfindung ist der Behälter ein Stromrichtercontainer und im Stromrichtercontainer ist ein Stromrichter angeordnet. Der Ausfall eines Stromrichters hat, soweit es sich um ein Fahrzeug handelt, kann zu einem Ausfall des gesamten Antriebs führen. Es entstehen Kosten für Bergung und Reparatur. Darüber hinaus können beispielsweise bei einem Schienenfahrzeug Schadensersatzansprüche durch die Nutzer des Fahrzeugs entstehen. Darüber hinaus reagieren Halbleiter, die sich im Stromrichter befinden, sehr empfindlich auf Feuchtigkeit. Ein Ausfall ist meistens nicht durch Korrosion verursacht, so dass er auch optisch im Vorfeld nicht erkennbar ist. Daher ist es für einen Stromrichter eine hohe Zuverlässigkeit von besonderer Bedeutung.

Nach dem erfindungsgemäßen Verfahren wird die Kondensationsleistung des Entfeuchtungsgerätes derart gesteuert oder geregelt, dass die Temperatur der Kaltseite einen Wert im Bereich zwischen -5°C und 10°C annimmt. Die Regelung kann beispielsweise durch Variation des elektrischen Stromes durch das Peltierelement gesteuert oder geregelt werden. Je niedriger die Temperatur, desto wirkungsvoller ist die Entfeuchtung. Aufgrund der hohen Leistungsfähigkeit des Entfeuchtungsgerätes lassen sich auch bei hohen Umgebungslufttemperaturen niedrige Temperaturen an der Kaltseite einstellen. Damit ist der Temperaturbereich, den die Kaltseite annehmen kann, sehr groß. Dieser große Bereich kann vorteilhafter Weise dadurch genutzt werden, dass eine Temperatur für die Kaltseite gesteuert oder geregelt wird, bei der eine Kondensation mit einer besonders hohen Ausbeute durchführbar ist. Dies ist im Temperaturbereich zwischen -5°C und 10°C gegeben. Eine kurzzeitig damit einhergehende Vereisung bei Temperaturen unterhalb des Gefrierpunktes kann dabei in Kauf genommen werden. Dazu werden Betriebszeiten mit höheren Temperaturen vorgesehen, in denen das Eis taut und als Wasser abgeleitet wird.

Wenn eine Eisbildung vermieden werden soll hat es sich als vorteilhaft erwiesen, die Temperatur der Kaltseite auf einen Wert im Bereich zwischen 0°C und 5°C zu regeln. Eisbildung wird hier verhindert, da der Gefrierpunkt nicht unterschritten wird. Da keine Zeiten zum Tauen vorgesehen werden müssen, hat es sich als günstig erwiesen, die Maximaltemperatur des Regelungs-/Steuerungsbereichs auf 5°C festzusetzen.

Nach dem erfindungsgemäßen Verfahren wird die Kondensationsleistung des Entfeuchtungsgerätes derart gesteuert oder geregelt, dass die Temperatur der Kaltseite einen Wert von mindestens 40 K unterhalb der Temperatur der Warmseite annimmt. Beim Betrieb des Entfeuchtungsgerätes im Innern eines Behälters hat es sich aufgrund der vorherrschenden Temperaturen und Werten der relativen Luftfeuchtigkeit als günstig ergeben, die Kaltseite und die Warmseite mit einer Temperaturdifferenz von mindestens 40°C zu betreiben. Aufgrund der thermischen Entkopplung ist der Wert am Entfeuchtungsgerät realisierbar. Dieser Wert kann mittels des elektrischen Stromes durch das Peltierelement gesteuert oder geregelt werden. Um zuverlässig in einem Behälter, der einer Erwärmung des Innenraums ausgesetzt ist, eine Entfeuchtung durchzuführen, muss das Entfeuchtungsgerät eine Temperaturdifferenz zwischen Innenraumtemperatur und Taupunkttemperatur erzeugen können. Dazu hat es sich als besonders günstig erwiesen, das Gerät insbesondere in Bezug auf die thermische Entkopplung so auszulegen, dass eine Temperaturdifferenz zwischen Warmseite und Kaltseite von mindestens 40°C einstellbar ist, um eine hohe Kondensationsleistung zuverlässig zu gewährleisten.

Bei einer weiteren vorteilhaften Ausgestaltung der Erfindung weist das Entfeuchtungsgerät einen ersten Betriebszustand und einen zweiten Betriebszustand auf, wobei im ersten Betriebszustand Feuchtigkeit aus der Luft an der Kaltseite als Eis gefriert und im zweiten Betriebszustand an der Kaltseite befindliches Eis zu Wasser umgewandelt wird, wobei der Betriebszustand durch Steuerung oder Regelung eines Stroms durch das Peltierelement eingestellt wird.

Es ist feststellbar, dass bei zunehmender Unterkühlung der Kaltseite die Kondensationsleistung ansteigt. Bei der Zielstellung einer hohen Kondensationsleistung genügt es nicht, die Taupunkttemperatur nur knapp zu unterschreiten. Die Anordnung im Behälter macht es erforderlich, der Kondensationsplatte (Kaltseite) möglichst viel Energie zu entziehen, was Peltier-"Kälteleistung" erfordert. Diese erforderliche Peltier-"Kälteleistung" benötigt "Antriebs-Strom" in der Nähe des optimalen Arbeitspunktes des Peltier-Entfeuchters.

Bei sinkender Feuchte-Belastung des Entfeuchters und auch bei sinkender Umgebungstemperatur würde ohne Reduzierung des Stroms im Peltier-Stromkreis dann die 0°C-Linie an der Kaltseite unterschritten werden (z.B. bei 30°C/40%rF). Es bildet sich Eis, und somit würde das Kondensat nicht mehr abtransportiert werden können. Um das dauerhafte Einfrieren an der Kaltseite zu vermeiden muss entweder
a) Ein Temperatursollwert 0°C +X eingestellt werden
b) Effektiver: eine Pendelung des Temperatursollwertes um wenige Grad unter und über 0°C mit wiederkehrend eintretenden Abtauphasen erfolgen können. Die Pendelung erfolgt in Zeitabschnitten von z.B. 15-20min mit einer Amplitude von z.B. ca. 5K.

Um die Betriebszustände zuverlässig einzustellen hat es sich als günstig erwiesen, die Temperatur an der Kaltseite zu messen und mit Hilfe des elektrischen Stromes durch das Peltierelement derart zu beeinflussen, dass sich die Temperatur im ersten Betriebszustand unterhalb des Gefrierpunktes von Wasser, d.h. unter Normalbedingungen unterhalb von 0°C, und im zweiten Betriebszustand oberhalb des Gefrierpunktes von Wasser, d.h. unter Normalbedingungen oberhalb von 0°C einstellt. Bei unterschiedlichen Werten von Luftdruck, zum Beispiel aufgrund der Betriebshöhe über dem Meeresspiegel, können sich die genannten Werte ändern.

Im Folgenden wird die Erfindung anhand der in den Figuren dargestellten Ausführungsbeispiele näher beschrieben und erläutert. Es zeigen:
- FIG 1: eine perspektivische Ansicht des Entfeuchtungsgerätes,
- FIG 2: eine weitere perspektivische Ansicht des Entfeuchtungsgerätes,
- FIG 3 bis FIG 5: jeweils einen Schnitt durch das Entfeuchtungsgerät
- FIG 6: eine stopfbuchsenartige Abdichtung und
- FIG 7: einen Behälter mit einem darin angeordneten Entfeuchtungsgerät.

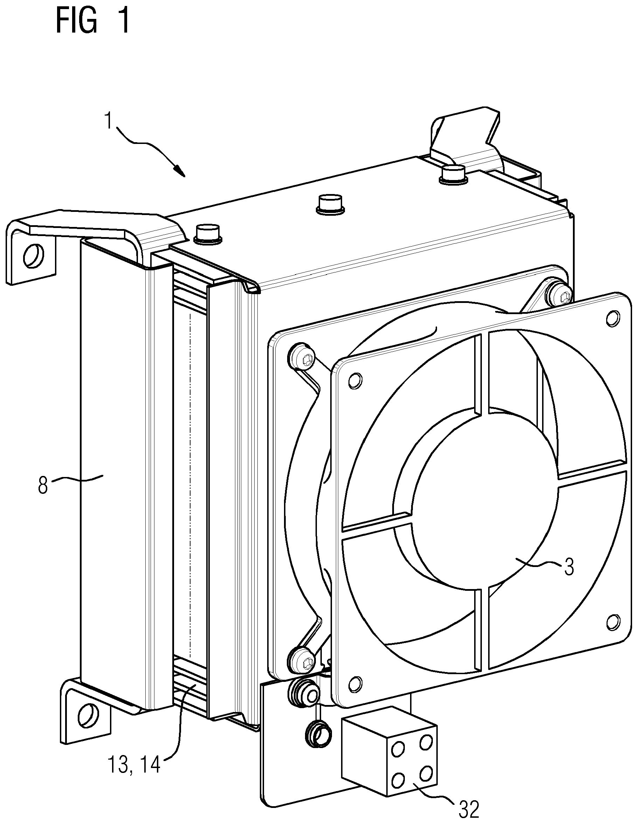

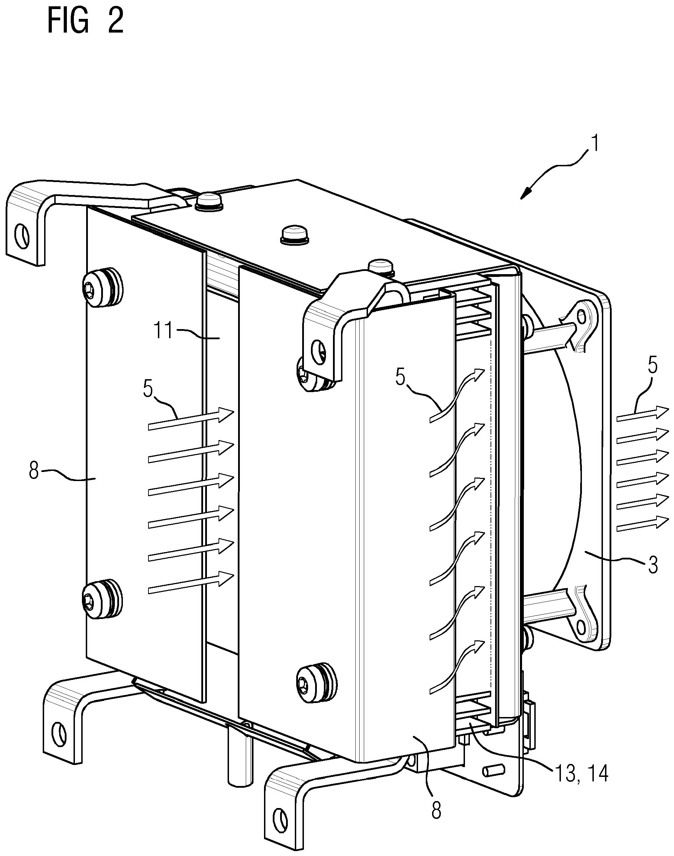

FIG 1 zeigt die perspektivische Ansicht eines Entfeuchtungsgerätes 1. Im Vordergrund ist dabei der Lüfter 3 zu erkennen. Der Wärmetauscher 13 der Warmseite 12 ist in diesem Ausführungsbeispiel als Kühlkörper ausgebildet. Seitlich, in dieser Abbildung nur von einer Seite zu erkennen, ist ein Leitblech 8 angeordnet. Unter anderem zur Steuerung, Regelung und auch zur Energieversorgung des Entfeuchtungsgerätes 1 ist ein Stecker 32 vorgesehen, über den entsprechende Signale und Energie an das Entfeuchtungsgerät 1 übermittelbar sind. Der Lüfter 3 erzeugt einen Luftstrom, der sich entlang der Kaltseite 11 und Warmseite 12 des Entfeuchtungsgerätes 1 ausbildet. Dies wird näher anhand der FIG 2 beschrieben.

FIG 2 zeigt das Entfeuchtungsgerät 1 in einer perspektivischen Darstellung aus einer anderen Richtung. Zur Vermeidung von Wiederholungen wird auf die Beschreibung zur FIG 1 sowie auf die dort eingeführten Bezugszeichen verwiesen. Die Leitbleche 8 des Entfeuchtungsgerätes 1 sind derart angeordnet, dass der Lüfter 3 bei der Erzeugung eines Luftstroms 5 die Luft derart in Bewegung setzt, das ein Teil der Luft sowohl an der Kaltseite 11 und am Wärmetauscher 13 entlangbewegt wird. Ein weiterer Anteil der Luft wird hingegen nur am Wärmetauscher 13 vorbeibewegt. Es hat sich herausgestellt, dass sich eine besonders gute Kondensationsleistung einstellt, wenn nur ein Teil des Luftstroms 5 an der Kaltseite 11 vorbeigeführt wird.

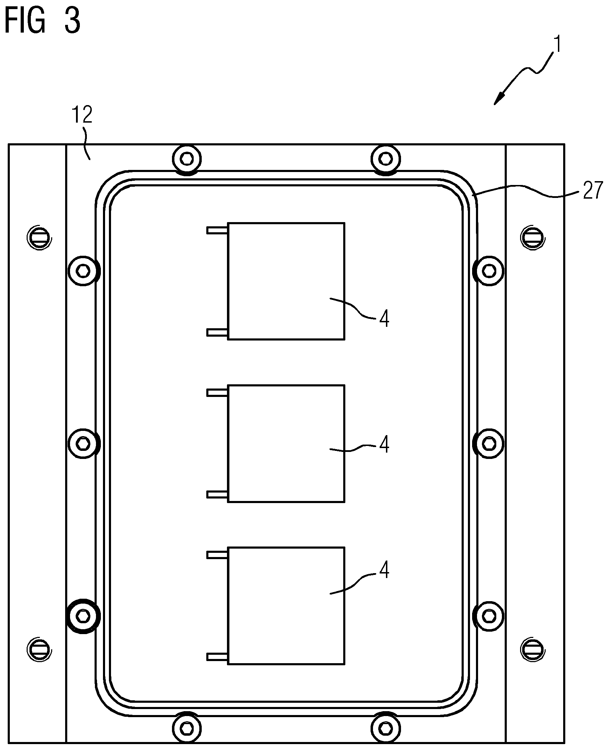

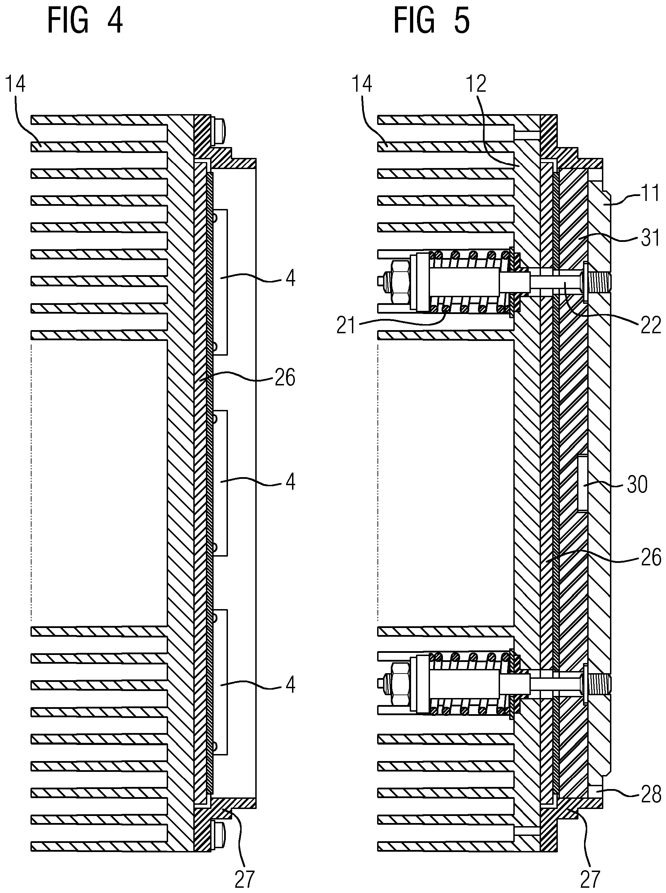

FIG 3 zeigt einen Schnitt durch das Entfeuchtungsgerät 1, wobei die Kaltseite 11 nicht dargestellt ist. Die Peltierelemente 4 sind im thermischen Kontakt auf dem Wärme-Spreiz-Bauteil 26 angeordnet (siehe dazu auch FIG 5). Das Wärme-Spreiz-Bauteil steht in Kontakt mit der Warmseite 12. Die Peltierelemente 4 bilden zusammen das in FIG 5 dargestellte Peltiersystem 31. Zur Steigerung der Leistungsfähigkeit des Entfeuchtungsgerätes 1 sind in diesem Aufbau mehrere Peltierelemente 4 thermisch parallel angeordnet. Zur Abdichtung des Entfeuchtungsgerätes 1 gegenüber der Umgebungsluft und der hier nicht dargestellten Kaltseite 11, die besonders anfällig für das Eindringen von Feuchtigkeit ist, ist ein Abdichtrahmen 27 vorgesehen. Dieser Abdichtrahmen 27, vorzugsweise aus einem nichtmetallischen Werkstoff hergestellt, verhindert das Eindringen von Feuchtigkeit an die Peltierelemente 4, die in Gegenwart von Feuchtigkeit zu Korrosion neigen. Diese Korrosion kann zu einem kurzfristigen Ausfall des Peltierelementes 4 und damit zum Ausfall des Entfeuchtungsgerätes 1 führen. Dadurch bewirkt die Korrosion eine deutliche Verkürzung der Lebensdauer des Entfeuchtungsgerätes 1.

Die FIG 4 zeigt einen Schnitt durch das Entfeuchtungsgerät der FIG 3. Zwischen dem als Kühlkörper ausgebildeten Wärmetauscher 13 und den Peltierelementen 4 ist ein Wärme-Spreiz-Bauteil 26 angeordnet. Dieses Bauteil verteilt die Wärmeenergie des Peltierelementes 4 auf die Fläche des Kühlkörpers 13, so dass die Temperaturdifferenz zwischen Kühlkörper 13 und Peltierelement 4 möglichst gering ist. Damit wird ein niedriger thermischer Übergangswiderstand zwischen Kühlkörper 13 und Peltierelement 4 erreicht, der es ermöglicht, das Peltierelement 4 bei relativ niedriger Temperatur zu betreiben. Bei Vernachlässigung des Temperaturabfalls über die Wärme-Spreiz-Platte 26 ergibt sich die Temperaturdifferenz am Peltierelement aus der Temperatur der Warmseite 12 und der für die Kondensation an der Kaltseite 11 benötigten Temperatur. Je niedriger die Temperatur an der Warmseite 12 ist, desto geringer ist somit die durch das Peltierelement herzustellende Temperaturdifferenz. Damit ist eine wirkungsvolle Entfeuchtung der Luft auch bei relativ geringer Temperaturdifferenz am Peltierelement möglich, wodurch der Einsatz von elektrischer Energie minimiert wird. Darüber hinaus zeigt FIG 4 den Abdichtrahmen 27 des Entfeuchtungsgerätes 1, der das Eindringen von Feuchtigkeit in das Innere des Entfeuchtungsgerätes 1 zuverlässig verhindert.

FIG 5 zeigt einen ähnlichen Schnitt wie FIG 4, jedoch an der Stelle, an der das Peltierelement 4 zwischen Warmseite 12 und Kaltseite 11 mittels Schraubenfeder 21 und Spannstift 22 eingespannt ist. Darüber hinaus ist im Gegensatz zur FIG 4 in dieser Figur auch die Kaltseite 11 dargestellt. Diese schließt sich über die Dichtfuge 28 an den Abdichtrahmen 27 an. Zur Vermeidung von Wiederholungen wird auf die Beschreibung zu den vorangehenden Figuren sowie auf die dort eingeführten Bezugszeichen verwiesen. Die Peltierelemente 4 sind im Innern des Peltiersystems 31 angeordnet und zueinander fixiert. Bei diesem Aufbau sind Kaltseite 11 und Warmseite 12 thermisch so gut voneinander isoliert, dass eine hohe Temperaturdifferenz zwischen Kaltseite 11 und Warmseite 12 durch die Peltierelemente 4 realisierbar ist. Mit Hilfe des Sensors 30 zur Erfassung der Temperatur der Kaltseite 11 kann die Temperatur der Kaltseite 11 geregelt werden, so dass sich eine hohe Ausbeute an Kondensationsleistung ergibt, und das Einfrieren des Kondensats bei sinkender Umgebungstemperatur und/oder Feuchtebelastung vermieden wird.

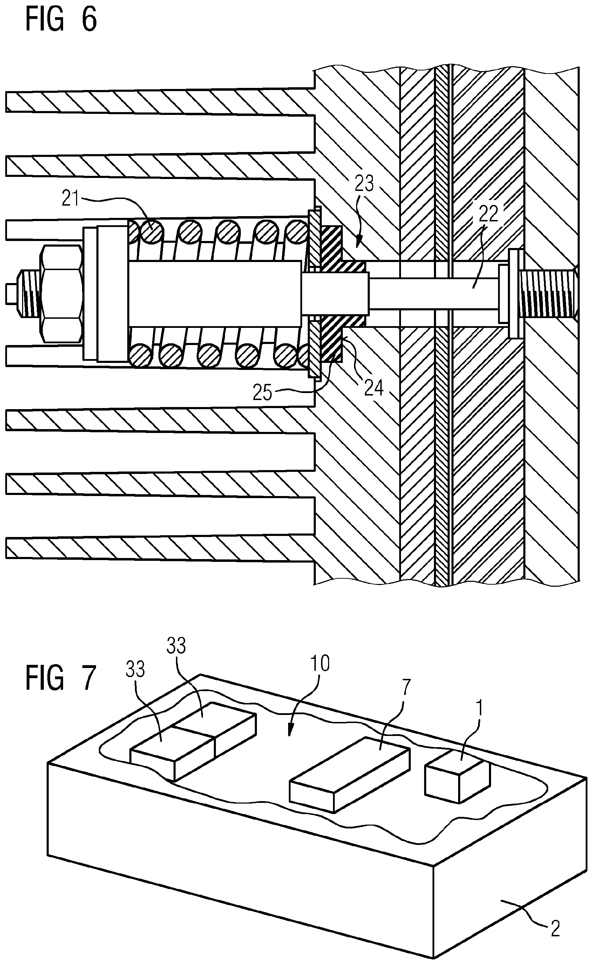

FIG 6 zeigt den Aufbau einer vorteilhaften stopfbuchsenartigen Abdichtung 23. In den Kühlkörper 13 wird eine Senkung 24 vorgesehen. In diese Senkung 24 wird eine Gummibuchse 25 eingebracht, die ein Eindringen von Feuchtigkeit in Richtung Kaltseite 11 bzw. das Peltiersystem 31 und die darin angeordneten Peltierelemente 4 verhindert. Dazu ist die Tiefe und Form der Senkung 24 derart gestaltet, dass die Gummibuchse 25 bei der Fixierung durch Schraubfedern 21 und Spannstifte 22 zusammengepresst wird. Ein unvermeidbarer Wärmeübergang zwischen Warmseite 12 und Kaltseite 11 über die Schraubfeder 21 und den Spannstift 22 kann dadurch weiter verringert werden, dass der Spannstift 22 eine Verjüngung aufweist. Die Verjüngung ist dabei eine Verringerung des Querschnitts über die Länge. Dabei wird der Querschnitt nur gerade so groß gewählt, wie es zur Übertragung der notwendigen Anpresskraft zwischen Warmseite 12 und Kaltseite 11 erforderlich ist.

FIG 7 zeigt einen Behälter 2, in dem ein Entfeuchtungsgerät 1 angeordnet ist. Dieser Behälter 2 kann beispielsweise ein Teil eines Fahrzeugs oder Schienenfahrzeugs sein, in dem Komponenten des elektrischen Antriebs angeordnet sind. Zu den Teilen eines elektrischen Antriebs gehört beispielsweise ein Stromrichter 7. Dieser muss zur Sicherstellung eines zuverlässigen Betriebs des Fahrzeugs und zur Realisierung einer langen Lebensdauer in trockener Umgebung betrieben werden. Dazu wird ein Entfeuchtungsgerät 1 im Innern des Behälters 2 angeordnet. Auch weitere elektrische oder elektronische Komponenten 33, insbesondere Komponenten die empfindlich sind gegenüber einer hohen Luftfeuchtigkeit, können im Behälter 2 angeordnet werden. Diese Komponenten, einschließlich eines Stromrichters 7, heizen die Luft 10 des Innenraums des Behälters 2 derart auf, dass am Entfeuchtungsgerät 1 eine hohe Temperaturdifferenz zwischen Kaltseite 11 und Warmseite 12 bereitgestellt werden muss, um der Luft 10 Feuchtigkeit entziehen zu können. Es hat sich als vorteilhaft erwiesen, das Entfeuchtungsgerät 1 derart in der Nähe einer Außenwand des Behälters 2 anzuordnen, dass die vom Lüfter 3 angesaugte und an der Kaltseite 11 vorbeigeführte Luft 10 möglichst, zumindest abschnittsweise, entlang der Außenwand geführt wird. Da die Umgebung außerhalb des Behälters 2 oftmals eine deutlich niedrigere Temperatur besitzt als die Luft 10 im Innern des Behälters 2, wird durch das Vorbeistreifen der Luft 10 an der Außenwand eine Temperatursenkung der Luft 10 ermöglicht. Diese führt dazu, dass das Entfeuchtungsgerät 1 effizienter und verlustärmer betrieben werden kann.

Zusammenfassend betrifft die Erfindung ein Entfeuchtungsgerät zum Entfeuchten von Luft in einem Behälter mit mindestens einem Peltierelement. Damit das Entfeuchtungsgerät vollständig im Innern eines Behälters angeordnet werden kann wird vorgeschlagen, das Peltierelement als einstufiges Peltierelement auszubilden und das Peltierelement mit einer Kaltseite und mit einer Warmseite thermisch zu verbinden, wobei die Kaltseite derart ausgestaltet ist, dass beim Betrieb des Entfeuchtungsgerätes an der Kaltseite Feuchtigkeit der Luft kondensiert. Zur Sicherstellung der Leistungsfähigkeit nach Einbau in den Behälter wird das Peltierelement zwischen Warmseite und Kaltseite mittels einer Schraubenfeder und eines Spannstifts eingespannt. Die Erfindung betrifft weiter einen Behälter mit einem solchen Entfeuchtungsgerät wobei das Entfeuchtungsgerät vollständig im Innern des Behälters angeordnet ist. Ferner betrifft die Erfindung ein Fahrzeug, insbesondere ein Schienenfahrzeug, mit einem solchen Behälter. Darüber hinaus betrifft die Erfindung ein Verfahren zum Entfeuchten von Luft im Innenraum eines Behälters mittels eines solchen Entfeuchtungsgerätes, wobei eine Kondensationsleistung des Entfeuchtungsgerätes in Abhängigkeit von der Temperatur der Kaltseite gesteuert oder geregelt wird.

## Patentansprüche

1. Entfeuchtungsgerät (1) zum Entfeuchten von Luft (10) in einem Behälter (2) mit mindestens einem Peltierelement (4), wobei das Peltierelement (4) als einstufiges Peltierelement (4) ausgebildet ist, wobei das Peltierelement (4) mit einer Kaltseite (11) und mit einer Warmseite (12) thermisch verbunden ist, wobei die Kaltseite (11) derart ausgestaltet ist, dass beim Betrieb des Entfeuchtungsgerätes (1) an der Kaltseite (11) Feuchtigkeit der Luft (10) kondensiert, wobei das Peltierelement (4) zwischen Warmseite (12) und Kaltseite (11) mittels einer Schraubenfeder (21) und eines Spannstifts (22) eingespannt ist, **dadurch gekennzeichnet, dass** die Warmseite (12) auf der dem Peltierelement (4) zugewandten Seite eine stopfbuchsenartige Abdichtung (23) aufweist, wobei die stopfbuchsenartige Abdichtung (23) durch eine Senkung (24) auf der Warmseite (12) mit einer darin eingebrachten Gummibuchse (25) ausgestaltet ist, wobei die Gummibuchse (25) am Innendurchmesser den Spannstift (22) umschließt.

2. Entfeuchtungsgerät (1) nach Anspruch 1, wobei die Schraubenfeder (21) auf der Warmseite (12) angeordnet ist.

3. Entfeuchtungsgerät (1) nach einem der Ansprüche 1 oder 2, wobei der Spannstift (22) an der Kaltseite (11), insbesondere mittels einer Schraubverbindung, starr verbunden ist.

4. Entfeuchtungsgerät (1) nach einem der Ansprüche 1 bis 3, wobei der Spannstift (22) eine Querschnittsverjüngung aufweist.

5. Entfeuchtungsgerät (1) nach einem der Ansprüche 1 bis 4, wobei die Warmseite (12) einen Wärmetauscher (13), insbesondere einen Kühlkörper, umfasst, wobei zwischen dem Wärmetauscher (13) und dem Peltierelement (4) ein Wärme-Spreiz-Bauteil (26) angeordnet ist.

6. Entfeuchtungsgerät (1) nach einem der Ansprüche 1 bis 5, wobei das Entfeuchtungsgerät (1) mindestens einen Lüfter (3) und ein Mittel zur Luftführung aufweist, wobei der Lüfter und das Mittel zur Luftführung derart angeordnet ist, einen Luftstrom (5) zu erzeugen, wobei sich der Luftstrom (5) über Kaltseite (11) und Warmseite (12) des Entfeuchtungsgerätes (1) erstreckt.

7. Entfeuchtungsgerät (1) nach Anspruch 6, wobei der Lüfter (3) eine axiale Ausblasrichtung aufweist, wobei die axiale Ausblasrichtung senkrecht zu einer Oberfläche der Kaltseite (11) angeordnet ist.

8. Entfeuchtungsgerät (1) nach einem der Ansprüche 1 bis 7, wobei das Entfeuchtungsgerät (1) eine Regelvorrichtung (6) umfasst, die derart ausgelegt ist, einen Strom durch das Peltierelement (4) mittels Pulsweitenmodulation zu regeln.

9. Entfeuchtungsgerät (1) nach einem der Ansprüche 1 bis 8, wobei eine Abdichtung zwischen der Kaltseite (11) und einem Abdichtrahmen (27) mittels einer Dichtfuge (28) aus elastischem oder plastischem Werkstoff ausgeführt ist.

10. Entfeuchtungsgerät (1) nach Anspruch 9, wobei der Abdichtrahmen (27) aus einem duroplastischen Werkstoff ausgeführt ist.

11. Entfeuchtungsgerät (1) nach einem der Ansprüche 9 oder 10, wobei auf zumindest Teilen des Abdichtrahmens (27) eine Wasserdampfsperre mit wärmeisolierender Eigenschaft angeordnet ist.

12. Behälter (2) mit einem Entfeuchtungsgerät (1) nach einem der Ansprüche 1 bis 11, wobei das Entfeuchtungsgerät (1) vollständig im Innern des Behälters (2) angeordnet ist, wobei das Entfeuchtungsgerät (1) derart im Behälter (2) angeordnet ist, dass ein durch den Lüfter (3) erzeugbarer Luftstrom (5) sich zumindest abschnittsweise entlang einer Außenwand des Behälters (2) ausbildet.

13. Behälter (2) nach Anspruch 12, wobei der Behälter (2) zur Aufnahme von elektrischen und/oder elektronischen Bauteilen ausgestaltet ist.

14. Behälter (2) nach einem der Ansprüche 12 oder 13, wobei der Behälter (2) ein Stromrichtercontainer ist und im Stromrichtercontainer ein Stromrichter (7) angeordnet ist.

15. Fahrzeug, insbesondere Schienenfahrzeug, mit einem Behälter (2) nach einem der Ansprüche 12 bis 14.

16. Verfahren zum Entfeuchten von Luft (10) im Innenraum eines Behälters (2) mittels eines Entfeuchtungsgerätes (1) nach einem der Ansprüche 1 bis 11, wobei eine Kondensationsleistung des Entfeuchtungsgerätes (1) in Abhängigkeit von der Temperatur der Kaltseite (11) gesteuert oder geregelt wird, **dadurch gekennzeichnet, dass** die Kondensationsleistung des Entfeuchtungsgerätes (1) derart gesteuert oder geregelt wird, dass die Temperatur der Kaltseite (11) einen Wert im Bereich zwischen -5°C und 10°C annimmt, wobei die Kondensationsleistung des Entfeuchtungsgerätes (1) derart gesteuert oder geregelt wird, dass die Temperatur der Kaltseite (11) einen Wert von mindestens 40 K unterhalb der Temperatur der Warmseite (12) annimmt.

17. Verfahren nach Anspruch 16, wobei die Kondensationsleistung des Entfeuchtungsgerätes (1) durch Regelung oder Steuerung des elektrischen Stromes durch das Peltierelement (4) des Entfeuchtungsgerätes (1) mittels Pulsweitenmodulation gesteuert oder geregelt wird.

18. Verfahren nach einem der Ansprüche 16 oder 17, wobei das Entfeuchtungsgerät (1) einen ersten Betriebszustand und einen zweiten Betriebszustand aufweist, wobei im ersten Betriebszustand Feuchtigkeit aus der Luft (10) an der Kaltseite (11) zu Eis gefriert und im zweiten Betriebszustand an der Kaltseite (11) befindliches Eis zu Wasser umgewandelt wird, wobei der Betriebszustand durch Steuerung oder Regelung eines Stroms durch das Peltierelement (4) eingestellt wird.

19. Verfahren nach Anspruch 18, wobei die Kaltseite (11) einen Sensor (30) zur Erfassung der Temperatur der Kaltseite (11) aufweist und wobei der Strom durch das Peltierelement (4) in Abhängigkeit von der Temperatur der Kaltseite (11) derart geregelt wird, dass sich im ersten Betriebszustand eine Temperatur unterhalb des Gefrierpunktes von Wasser einstellt und im zweiten Betriebszustand eine Temperatur oberhalb des Gefrierpunktes von Wasser einstellt.

## Claims

1. Dehumidifier unit (1) for dehumidifying air (10) in a container (2) having at least one Peltier element (4), wherein the Peltier element (4) is embodied as a single-stage Peltier element (4), wherein the Peltier element (4) is thermally connected to a cold side (11) and to a warm side (12), wherein the cold side (11) is embodied such that, during operation of the dehumidifier unit (1), humidity of the air (10) condenses on the cold side (11), wherein the Peltier element (4) is clamped in between the warm side (12) and the cold side (11) by means of a helical spring (21) and a clamping pin (22), **characterised in that** the warm side (12), on the side facing towards the Peltier element (4), has a gland-type seal (23), wherein the gland-type seal (23) is embodied by a recessed area (24) on the warm side (12) with a rubber bush (25) inserted therein, wherein the rubber bush (25) surrounds the clamping pin (22) on its inner diameter.

2. Dehumidifier unit (1) according to claim 1, wherein the helical spring (21) is arranged on the warm side (12).

3. Dehumidifier unit (1) according to one of claims 1 or 2, wherein the clamping pin (22) is rigidly connected to the cold side (11), especially by means of a screw connection.

4. Dehumidifier unit (1) according to one of claims 1 to 3, wherein the clamping pin (22) has a narrowing of its cross-section.

5. Dehumidifier unit (1) according to one of claims 1 to 4, wherein the warm side (12) comprises a heat exchanger (13), in particular a heat sink, wherein a heat-spreading component (26) is arranged between the heat exchanger (13) and the Peltier element (4).

6. Dehumidifier unit (1) according to one of claims 1 to 5, wherein the dehumidifier unit (1) has at least one fan (3) and a means for air guidance, wherein the fan and the means for air guidance is arranged so as to create an air flow (5), wherein the air flow (5) extends over cold side (11) and warm side (12) of the dehumidifier unit (1).

7. Dehumidifier unit (1) according to claim 6, wherein the fan (3) has an axial exhaust direction, wherein the axial exhaust direction is arranged at right angles to a surface of the cold side (11).

8. Dehumidifier unit (1) according to one of claims 1 to 7, wherein the dehumidifier unit (1) comprises a regulation facility (6), which is designed so as to regulate a current through the Peltier element (4) by means of pulse width modulation.

9. Dehumidifier unit (1) according to one of claims 1 to 8, wherein a seal between the cold side (11) and a sealing frame (27) is embodied by means of a sealing joint (28) made of an elastic or plastic material.

10. Dehumidifier unit (1) according to claim 9, wherein the sealing frame (27) is embodied from a duroplastic material.

11. Dehumidifier unit (1) according to one of claims 9 or 10, wherein a water vapour barrier with heat-insulating properties is arranged on at least parts of the sealing frame (27).

12. Container (2) with a dehumidifier unit (1) according to one of claims 1 to 11, wherein the dehumidifier unit is arranged completely in the interior of the container (2), wherein the dehumidifier unit (1) is arranged in the container (2) such that a flow of air (5) able to be created by the fan (3) forms at least in sections along an outer wall of the container (2).

13. Container (2) according to claim 12, wherein the container (2) is embodied to accommodate electrical and/or electronic components.

14. Container (2) according to one of claims 12 or 13, wherein the container (2) is a power converter container and a power converter (7) is arranged in the power converter container.

15. Vehicle, in particular a rail vehicle, with a container (2) according to one of claims 12 to 14.

16. Method for dehumidifying air (10) in the interior of a container (2) by means of a dehumidifier unit (1) according to one of claims 1 to 11, wherein a condensation power of the dehumidifier unit (1) is controlled or regulated depending on the temperature of the cold side (11), **characterised in that** the condensation power of the dehumidifier unit (1) is controlled or regulated such that the temperature of the cold side (11) assumes a value ranging between -5°C and 10°C, wherein the condensation power of the dehumidifier unit (1) is controlled or regulated such that the temperature of the cold side (11) assumes a value of at least 40 K below the temperature of the warm side (12).

17. Method according to claim 16, wherein the condensation power of the dehumidifier unit (1) is controlled or regulated by control or regulation of the electrical current through the Peltier element (4) of the dehumidifier unit (1) by means of pulse width modulation.

18. Method according to one of claims 16 to 17, wherein the dehumidifier unit (1) has a first operating state and a second operating state, wherein in the first operating state humidity from the air (10) on the cold side (11) freezes to ice and in the second operating state ice located on the cold side (11) is converted into water, wherein the operating state is set by control or regulation of a current through the Peltier element (4) .

19. Method according to claim 18, wherein the cold side (11) has a sensor (30) for detection of the temperature of the cold side (11) and wherein the current through the Peltier element (4) is regulated as a function of the temperature of the cold side (11) such that, in the first operating state, a temperature below the freezing point of water obtains and, in the second operating state, a temperature above the freezing point of water obtains.

## Revendications

1. Appareil de déshumidification pour déshumidifier de l'air dans un récipient (2), comprenant au moins un élément (4) à effet Peltier, l'élément (4) à effet Peltier étant constitué sous la forme d'un élément (4) à effet Peltier à un seul étage, l'élément (4) à effet Peltier étant relié thermiquement à un côté (11) froid et à un côté (12) chaud, le côté (11) froid étant constitué de manière à condenser, lorsque l'appareil (1) de déshumidification est en fonctionnement, l'humidité de l'air (10) du côté (11) froid, l'élément (4) à effet Peltier étant bloqué entre le côté (12) chaud et le côté (11) froid au moyen d'un ressort (21) hélicoïdal et d'une broche (22) de blocage, **caractérisé en ce que** le côté (12) chaud a, du côté tourné vers l'élément (4) à effet Peltier, une étanchéité (23) de type à presse-étoupe, l'étanchéité (23) de type à presse-étoupe étant conformée dans un renfoncement (24) du côté (12) chaud en ayant une douille (25) en caoutchouc qui y est introduite, la douille (25) en caoutchouc entourant un diamètre intérieur de la broche (22) de blocage.

2. Appareil de déshumidification suivant la revendication 1, dans lequel le ressort (21) hélicoïdal est disposé du côté (12) chaud.

3. Appareil de déshumidification suivant l'une des revendications 1 ou 2, dans lequel la broche (22) de blocage est reliée rigidement au côté (11) froid, notamment au moyen d'un vissage.

4. Appareil de déshumidification suivant l'une des revendications 1 à 3, dans lequel la broche (22) de blocage a un rétrécissement de section transversale.

5. Appareil de déshumidification suivant l'une des revendications 1 à 4, dans lequel le côté (12) chaud comprend un échangeur de chaleur (13), notamment un dissipateur de chaleur, une pièce (26) d'étalement de la chaleur étant montée entre l'échangeur de chaleur (13) et l'élément (4) à effet Peltier.

6. Appareil de déshumidification suivant l'une des revendications 1 à 5, dans lequel l'appareil (1) de déshumidification a au moins un ventilateur (3) et un moyen de conduite de l'air, le ventilateur et le moyen de conduite de l'air étant disposés de manière à produire un courant (5) d'air, le courant (5) d'air s'étendant sur le côté (11) froid et le côté (12) chaud de l'appareil (1) de déshumidification.

7. Appareil de déshumidification suivant la revendication 6, dans lequel le ventilateur (3) a une direction de refoulement axiale, la direction de refoulement étant perpendiculaire à la surface du côté (11) froid.

8. Appareil de déshumidification suivant l'une des revendications 1 à 7, dans lequel l'appareil (1) de déshumidification comprend un système (6) de réglage, qui est conçu de manière à régler un courant par l'élément (4) à effet Peltier au moyen d'une modulation en largeur d'impulsion.

9. Appareil de déshumidification suivant l'une des revendications 1 à 8, dans lequel une étanchéité entre le côté (11) froid et un cadre (27) d'étanchéité est réalisée au moyen d'un joint (28) d'étanchéité en une manière élastique ou plastique.

10. Appareil de déshumidification suivant la revendication 9, dans lequel le cadre (27) d'étanchéité est en une matière thermodurcissable.

11. Appareil de déshumidification suivant l'une des revendications 9 ou 10, dans lequel une barrière à la vapeur d'eau à propriété isolante de la chaleur est disposée sur au moins une partie du cadre (27) d'étanchéité.

12. Récipient (2) ayant un appareil (1) de déshumidification selon une des revendications 1 à 11, l'appareil (1) de déshumidification étant disposé entièrement à l'intérieur du récipient (2), l'appareil (1) de déshumidification étant disposé dans le récipient (2) de manière à ce qu'un courant (5) d'air pouvant être produit par le ventilateur (3) se constitue au moins par endroits le long d'une paroi extérieure du récipient (2).

13. Récipient (2) suivant la revendication 12, dans lequel le récipient (2) est conformé pour la réception de pièces électriques et/ou électroniques.

14. Récipient (2) suivant l'une des revendications 12 ou 13, dans lequel le récipient (2) est un conteneur d'onduleur et un onduleur (7) est disposé dans le conteneur d'onduleur.

15. Véhicule, notamment véhicule ferroviaire, ayant un récipient (2) suivant l'une des revendications 12 à 14.

16. Procédé de déshumidification de l'air (10) à l'intérieur d'un récipient (2) au moyen d'un appareil (1) de déshumidification suivant l'une des revendications 1 à 11, dans lequel on commande ou on règle une puissance de condensation de l'appareil (1) de déshumidification en fonction de la température du côté (11) froid, **caractérisé en ce que** l'on commande ou l'on règle la puissance de condensation de l'appareil (1) de déshumidification de manière à ce que la température du côté (11) froid prenne une valeur dans la plage comprise entre -5°C et -10°C, dans lequel on commande ou on règle la puissance de condensation de l'appareil (1) de déshumidification, de manière à ce que la température du côté (11) froid prenne une valeur d'au moins 40 K en-dessous de la température du côté (12) chaud.

17. Procédé suivant la revendication 16, dans lequel on commande ou on règle la puissance de condensation de l'appareil (1) de déshumidification en réglant et en commandant le courant électrique dans l'élément (4) à effet Peltier de l'appareil (1) de déshumidification au moyen d'une modulation en largeur d'impulsion.

18. Procédé suivant l'une des revendications 16 ou 17, dans lequel l'appareil (1) de déshumidification a un premier état de fonctionnement et un deuxième état de fonctionnement, dans lequel, dans le premier état de fonctionnement, on congèle en glace du côté (11) froid de l'humidité de l'air (10) et, dans le deuxième état de fonctionnement, on transforme en eau de la glace se trouvant du côté (11) froid, l'état de fonctionnement étant établi par commande ou réglage d'un courant dans l'élément (4) à effet Peltier.

19. Procédé suivant la revendication 18, dans lequel le côté (11) froid a un capteur (30) pour détecter la température du côté (11) froid et dans lequel on règle le courant dans l'élément (4) à effet Peltier en fonction de la température du côté (11) froid de manière à établir, dans le premier état de fonctionnement, une température en-dessous du point de congélation de l'eau et à établir, dans le deuxième état de fonctionnement, une température au-dessus du point de congélation de l'eau.
